# EUROPEAN PATENT SPECIFICATION

(11) **EP 1 980 138 B1**
(45) Date of publication and mention of the grant of the patent: **11.03.2020**
(21) Application number: 07700416.6
(22) Date of filing: 09.01.2007
(51) Int. Cl.: H05B 3/86

(54) **HEATING CIRCUITS FOR AUTOMOTIVE GLAZINGS**
HEIZSCHALTUNGEN FÜR AUTOVERGLASUNG
CIRCUITS DE CHAUFFAGE POUR VITRERIE AUTOMOBILE

(30) Priority: 18.01.2006 GB 0600983
(43) Date of publication of application: 15.10.2008
(73) Proprietor: Pilkington Group Limited, Lathom, near Ormskirk, Lancashire L40 5UF (GB)
(72) Inventor: LYON, Michael, Lancashire L39 OHX (GB); DIXON, Jonathan, Lancashire WN8 7PD (GB)
(74) Representative: Denno, Richard Christopher Somer
(86) International application number: PCT/GB2007/050009
(87) International publication number: WO 2007/083160

(56) References cited:
- EP-A- 0 524 537
- WO-A-2004/028212

## Description

The present invention relates to heating circuits for automotive glazings, and in particular, to heating circuits used to de-ice windscreens.

In cold weather conditions, such as frost and snow, glazings used in automotive vehicles become iced-over. This is a particular problem for both windscreens and backlights, and it is known to provide an electrically resistive heating element in a glazing to form both a heated windscreen and a heated backlight in a vehicle to demist the window and to assist in removal of ice and snow. In the case of a windscreen, an additional problem is that the rest position in which the wipers are stowed when not in use is at the bottom of the windscreen, and often below the level of the bonnet or hood. In adverse weather conditions, not only can the wipers be covered in snow, but they can also become frozen to the windscreen.

One solution to this problem is to provide a heating circuit in the region of the windscreen where the wiper rest position is located. This region is often known as a heated wiper parking area. Typically, wiper de-ice circuits use a single element, which may be printed using a silver-containing ink (and positioned on the outside of the inner pane of a laminated glazing) or may comprise wires embedded within the laminated structure. Such circuits operate at around 12-13 V.

US 4,373,130 discloses a concealed electric heating element arrangement for a vehicle windshield. The element arrangement comprises a series of heating conductors and busbars located between two ceramic heat-absorbing layers. The arrangement may be placed on the outside surface of an inner laminated pane, or one ceramic layer, the heating conductors and busbars placed on the inner surface of the outer pane and a second ceramic layer on the outer surface of the inner pane. The ceramic material not only acts to absorb heat in the region of the wiper rest area, but conceals the heating conductor and busbar arrangement from view.

Other solutions to the problem of de-icing the wiper are also known. US 5,467,522 discloses the use of a conductive coating along the bottom edges of a laminated windshield, which creates heat in order to de-ice the wiper when current is supplied from the vehicle battery. WO2004/028212 discloses a heatable wiper rest area comprising an electrically conductive region divided by a number of busbars into several discrete heatable areas. A first lead connects to some of the heatable areas, and is insulated from a second lead connecting to the other heatable areas. The use of a number of discrete areas reduces the number of hotspots in the coating when power is applied to it through the busbars.

Each of these approaches provides a single source of heat in the wiper parking area. US 5,434,384 discloses a windshield having two separate heating circuits, one around the periphery of the windshield for de-icing an upper, vision area, and one in a lower portion of the windshield, facing the wiper parking area, for de-icing the wiper. A power source may be switched between the two circuits, or to both at once. Although separate heating circuits for the wiper parking area and the vision area of the windscreen are provided, each only functions as a single heat source for that area.

The heat source provides the same energy to the wiper parking area or the windscreen regardless of the severity of the icing problem. For example, if the wiper or windscreen only has a minor covering of snow or ice, the energy supplied is the same as that supplied for severe icing. This is a waste of energy and battery power. Similarly, in severe conditions, the single heat source will take longer to de-ice the wiper or windscreen than would be otherwise expected, as only a limited amount of heat energy can be supplied.

There is therefore a need for a design of an environmentally responsive heating element that reduces energy wastage in milder weather conditions, and which ensures that the de-icing process takes place as quickly as possible in severe weather conditions.

The present invention aims to address these problems by providing an electrically heated window laminated from at least an outer ply and an inner ply of a transparent glazing material and at least one ply of an interlayer material extending between the plies of glazing material, the window comprising an electrically resistive heating element that extends across at least a portion of the window, wherein the electrically resistive heating element comprises at least a first and a second heating circuit, electrically isolated from each other, and positioned on top of another so as to be in registration with each other, so that only a single circuit is visible from the outside of the vehicle.

By use of separate, independently controlled heating circuits, efficient use is made of a vehicle's electrical supply, and the response of the window to environmental conditions is improved.

The first heating circuit may comprise an electrically conductive coating on a surface of the outer ply of glazing material. Alternatively, the first heating circuit may comprise an array of wires embedded in a first surface of the interlayer material.

The second heating circuit may comprise an electrically conductive coating on a surface of one of the plies of glazing material. Alternatively, the second heating circuit may comprise an array of wires embedded in a second surface of the interlayer material.

Preferably, the first heating circuit comprises an array of heating conductors printed on the outer surface of the inner ply of glazing material, and the second heating circuit comprises an array of wires embedded in a surface of the interlayer material and electrically isolated from the first heating circuit. Preferably, the heating conductors are printed with a silver-containing ink. Preferably, the wires are copper wires.

The heating element may also comprise a third heating circuit located on the inner surface of the outer ply of glazing material. The third heating circuit may comprise an electrically conductive coating. Preferably, the third heating circuit comprises an array of heating conductors. Preferably, the heating conductors are printed with a silver-containing ink.

Preferably, the electrically resistive heating element extends across the area of the window where a wiper is parked in a rest position.

The invention will now be described by way of example only, and with reference to the accompanying drawings, in which:
Figure 1 is a schematic cross-sectional representation of multiple heating circuits for a heated wiper parking area in accordance with a first embodiment of the invention;
Figure 2 is a schematic cross-sectional representation of multiple heating circuits for a heated windscreen in accordance with a second embodiment of the invention;
Figure 3 is a schematic cross-sectional representation of multiple heating circuits for a heated windscreen in accordance with a third embodiment of the invention;
Figure 4 is a schematic plan view of a circuit arrangement used in testing;
Figure 5 is a schematic cross-sectional view of the glazing used in testing; and
Figure 6 is a chart showing the temperature of the glazing during the test.

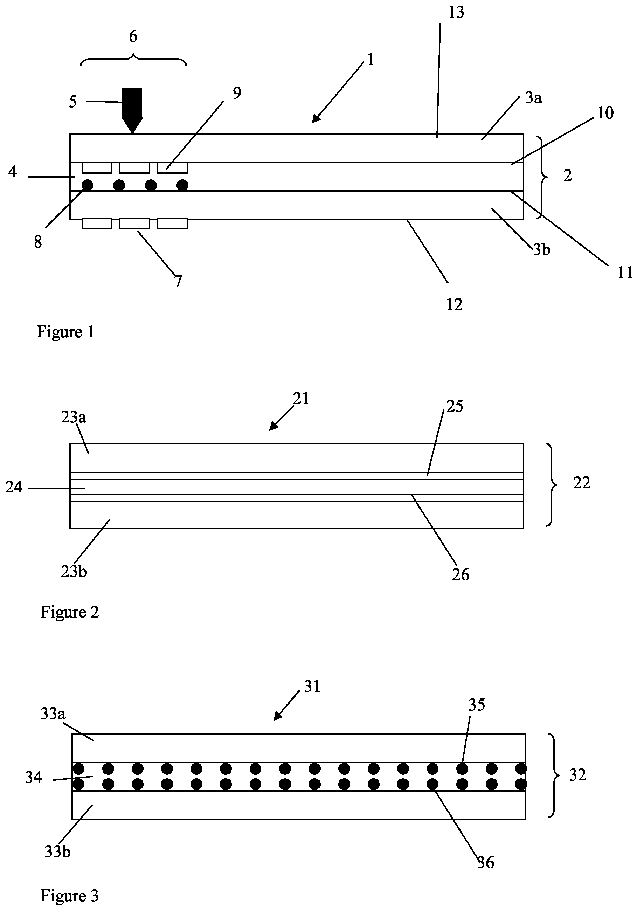

As discussed above, wiper de-ice circuits and windscreen de-ice circuits use a single heating element, operating at around 12-13 V. Such heating elements are electrically resistive, creating heat when current from a vehicle's electrical supply is passed through them. Such elements are connected to the electrical supply by means of busbars using techniques known within the automotive glazing industry. In accordance with a first embodiment of the invention, in order to control the amount of heat supplied to the wiper parking area, the single heating element has been split into a number of separate circuits positioned on different surfaces of a laminated windscreen structure, as shown in Figure 1. A windscreen 1, having a laminated structure 2, comprises an outer ply or pane 3a and an inner ply or pane 3b of a glazing material, such as annealed glass. A ply of an interlayer material, such as polyvinyl butyral polymer (PVB) is sandwiched between the inner and outer panes 3a 3b forming an interlayer 4. A wiper 5 is shown in the rest position (at the bottom of the windscreen 1) in the heated wiper parking area 6.

Within the heated wiper parking area 6 are three separate heating circuits 7, 8, 9. A first heating circuit 7 comprises a number of heating conductors printed using a silver containing ink. The first heating circuit 7 is formed on the outer side 12 of the inner pane 3b. The second heating circuit 8 comprises a number of copper wires embedded within the laminate 2, between the interlayer 4 and the inner side 11 of the inner pane 3b. The wires are coated with a layer of polyamide, which is black in colour, giving an improved aesthetic appearance when viewed through the glazing compared with conventional copper wires. The wire circuit may comprise a single wire, looped between opposing busbars, or several wires. A third heating circuit 9 comprises a number of heating conductors printed using a silver-containing ink. The third heating circuit 9 is formed on the inner side 10 of the outer pane 3a. No circuits are provided on the outer side 13 of the outer pane 3a, as this forms the region where the wiper blade 5 is stowed, in contact with the windscreen 1, when not in use. The second and third heating circuits 8, 9 are therefore coated on opposite sides of the interlayer 4. The circuits 7, 8, 9 are connected to the vehicle electrical supply be means of busbars (not shown). In an alternative construction, the second and third heating circuits 8, 9 may comprise an array of wires, each array being embedded on opposite sides of the interlayer 4.

As shown in Figure 1, the three circuits 7, 8, 9 are positioned one on top of another such that they are in registration, so that only a single circuit is visible from the outside of the vehicle. However, the individual components of the circuit need not be in registration, for example, an individual wire need not be in registration with an individual printed line. If desired, this single circuit can be concealed under the obscuration band provided around the periphery of the windscreen 1. Such an obscuration band may be provided by printing, or by using a coloured PVB interlayer in the laminated structure 2. The three circuits are also electrically isolated from one another.

In the structure of Figure 1, each circuit is shown as extending across the same region of the glazing. However, it may be desired to have individual "hot spots", or localised heating, such as just below the region where the wiper rests on the glazing, rather than a continuous, heated band along the bottom edge of the glazing. In this case an elongate single circuit may be provided along the bottom edge of the glazing, with at least one smaller circuit, in registration with the elongate circuit, in each region where the wiper rests. This allows additional heating in regions where it is required most.

By providing multiple heating circuits, each of which is controlled independently, the total heat supplied to the heated wiper parking area can be controlled in discrete steps. This enables a more efficient use of the vehicle's electrical supply, and provides a better response to environmental conditions. The ability to use each circuit independently, as well as in combination, results in a variable and adaptable de-icing mechanism.

The following examples illustrate the advantages of the invention.

In cold, but relatively mild weather conditions, where the temperature is around 0°C or just below, only one circuit, for example, the first heating circuit 7, needs to be switched on to de-ice the wiper. This results in reduced energy consumption and more efficient use of the vehicle's electrical supply.

In severe weather conditions, where the temperature is well below 0°C, all three heating circuits 7, 8, 9 need to be switched on in order to de-ice the wiper as quickly as possible. This results in an improved response to environmental conditions.

However, once the temperature of the heated wiper parking area approaches 0°C, it is not necessary for all three circuits 7, 8, 9 to remain switched on. For example, two of the circuits, the second and third heating circuits 8, 9 can be switched off. This reduces the energy consumption whilst maintaining the de-icing function. Furthermore, the first heating circuit 7 may remain switched on for the entire time the vehicle is in use to help prevent snow build up around the wiper whilst driving. Thus, the independent control of the circuits enables a versatile, environmentally responsive de-icing mechanism, operating at the most efficient energy consumption rate possible for the weather conditions. If desired, either the second heating circuit 8 or the third heating circuit 9 may remain switched on, or be used in preference to the first heating circuit 7, dependent on the amount of heat necessary for particular weather conditions.

Although the above examples relate to heated windscreen parking areas, the present invention can also be applied to the heater circuits used to de-ice the windscreen, sidelights, mirrors or backlight of a vehicle. Such heating circuits may be additionally provided in the regions of the windscreen near the "A" pillar of the vehicle, to allow the region where the wiper comes to rest at the top of its travel area to be heated in inclement weather.

Figure 2 shows a cross-sectional representation of multiple heating circuits for a vehicle windscreen in accordance with a second embodiment of the present invention. A windscreen 21 is of a laminated structure 22 comprising a pair of glass plies or panes 23a 23b having an interlayer 24 interposed between them. The interlayer 24 is preferably of PVB. Heating circuits 25, 26 are provided in the form of two layers of a conductive coating on either side of the interlayer 24, one on the inner side of the outer pane 23a and one on the inner side of the inner pane 23b. The two layers are electrically isolated from one another, and are connected to the vehicle electrical supply by means of busbars (not shown). Current is supplied independently to each heating circuit 25, 26, such that heat may be supplied to the windscreen 21 in discrete steps. For example, in severe weather conditions, where the temperature is well below 0°C, both heating circuits 25, 26 need to be turned on to de-ice the windscreen. In milder conditions, or once the temperature of the window has reached 0°C or just below, only one of the heating circuits 25, 26 needs to be turned on to de-ice the windscreen or to keep it free of snow whilst the vehicle is in use. Typical electrically conductive coatings used in laminated windscreens include ITO (indium tin oxide) and silver based stacks (as used in infra-red reflective coatings).

Figure 3 is a cross-sectional representation of multiple heating circuits for a vehicle windscreen in accordance with a third embodiment of the present invention. A windscreen 31, has a laminated structure 32 comprising a pair of glass plies or panes 33a, 33b, having an interlayer 34 interposed between them. The interlayer 34 is preferably of PVB. Two heating circuits 35, 36, each comprising an array of wires are provided on either side of the interlayer 34. The heating circuits are electrically isolated from one another, and are independently controlled, such that heat can be supplied in discrete steps. Each is connected to the electrical supply of the vehicle by means of busbars (not shown) For example, in severe weather conditions, where the temperature is well below 0°C, both heating circuits 35, 36 need to be turned on to de-ice the windscreen. In milder conditions, or once the temperature of the window has reached 0°C or just below, only one of the heating circuits 35, 36 needs to be turned on to de-ice the windscreen or to keep it free of snow whilst the vehicle is in use.

Although only two such wired circuits may be used with a single interlayer of PVB material, additional circuits may be included in the glazing. In this case a single layer of 0.76 mm thick PVB is replaced with two 0.38 mm thick layers of PVB, having a further wire circuit laminated therebetween. As an alternative to using a wire array or a printed circuit, the relevant regions of the glass panes in the laminated construction may have an electrically conductive coating, for example, ITO (indium tin oxide). In addition, the glass used to form the laminated structure may itself be coated, with coatings known for use with such glazings within the automotive industry.

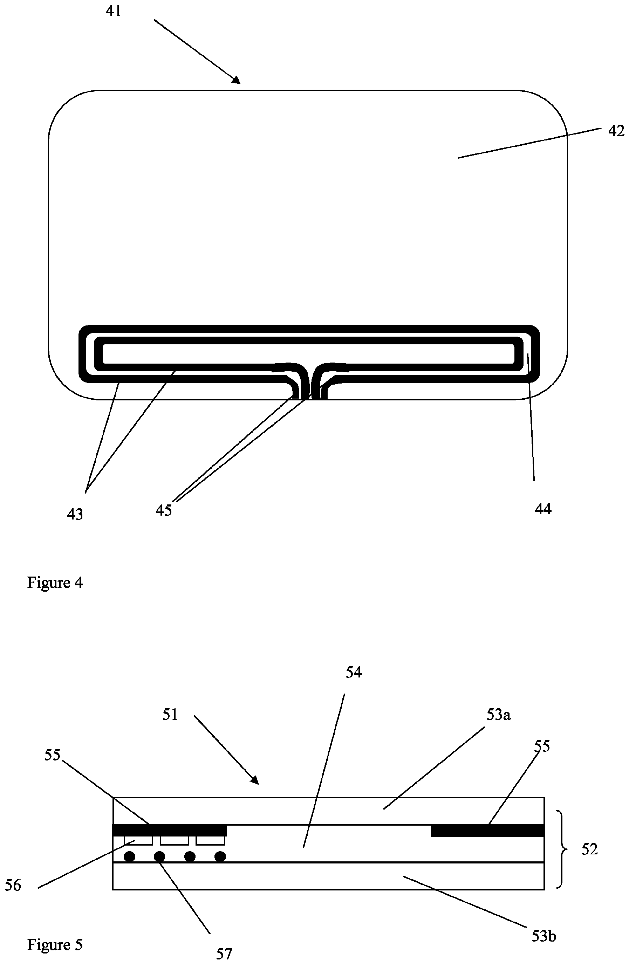

In order to test the basic principle of the multiple heating circuit arrangement of the present invention, a sample comprising a printed circuit and a wired circuit, in registration with each other, and laminated between two plies of glass, was constructed. A schematic plan view of the construction is shown in Figure 4. A glazing 41 comprises a first pane or ply of glass 42 and a second pane or ply of glass (not shown). As viewed from above, a first heating circuit 43 is printed on the inside of the first pane of glass. A second heated circuit 44 is provided, in registration with the first, and comprises polyamide-coated copper wires. Each circuit was powered to produce approximately 1000Wm⁻², such that the total power was 2000 Wm⁻², as for a standard, single circuit heated wiper parking area.

Figure 5 is a cross-sectional representation of the glazing used in testing. The glazing 51 has a laminated structure 52, comprising a first pane or ply of glass 53a and a second pane or ply of glass 53b. A PVB interlayer 54 is laminated between the first 53a and second 53b panes of glass. An obscuration band 55 is printed on the inner surface of the first pane of glass 53a. A first heating circuit 56, is printed, using a silver-containing ink, on the obscuration band. A second heating circuit 57, comprising an array of wires, is provided between the PVB interlayer 54 and the inner surface of the second pane of glass 53b.

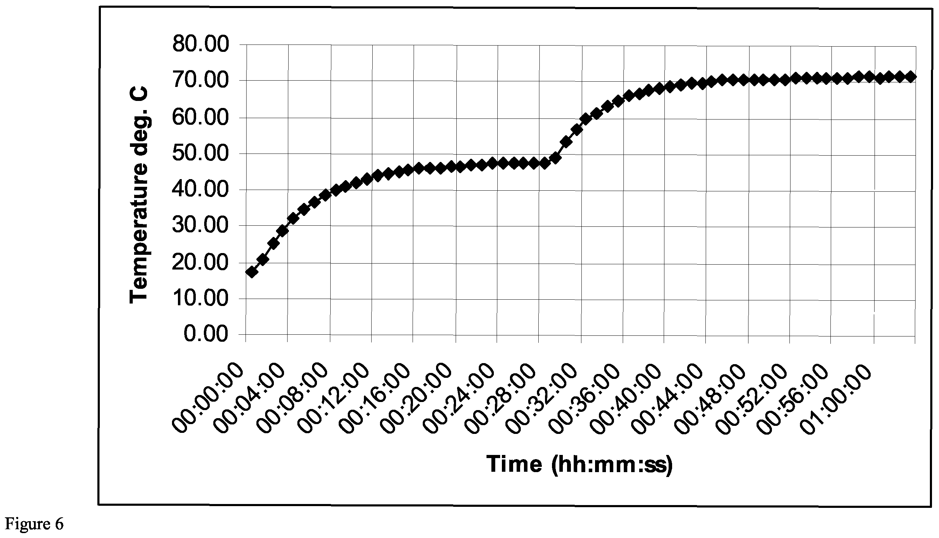

Figure 6 is a chart showing increasing temperature with time at the surface of the glazing, measured using infra red thermal imaging equipment. A heating time of approximately 1 hour was chosen as a benchmark for testing. After approximately 32 minutes, the second heating circuit was switched on, and the rate of change of the measured temperature increases immediately. When the heating circuits are used in a vehicle, the heating time is shorter, typically around 10 minutes. However, the circuit may be left switched on to provide continuous heating of the circuit areas, or may be cycled, for example, on (10 minutes) off (two minutes) on (three minutes) off (two minutes) and so on. Cycle times and durations may be chosen dependent on typical weather conditions or power consumption requirements or considerations.

The splitting of a single windscreen heating circuit into a minimum of two, independently controlled, circuits results in a de-icing mechanism that is more efficient in its use of the vehicle's electrical supply and gives an improved response to environmental conditions in times of severe or inclement weather.

## Claims

1. An electrically heated window (1) laminated from at least an outer ply (3a) and an inner ply (3b) of a transparent glazing material and at least one ply of an interlayer material extending between the plies of glazing material, the window comprising an electrically resistive heating element that extends across at least a portion of the window, **characterized in that** the electrically resistive heating element comprises at least a first and a second heating circuit, (7,8) electrically isolated from each other, and positioned one on top of another so as to be in registration with each other, so that only a single circuit is visible from the outside of the vehicle.

2. The electrically heated window of claim 1, wherein the first heating circuit comprises an electrically conductive coating on a surface of the outer ply of glazing material (3a).

3. The electrically heated window of claim 1, wherein the first heating circuit comprises an array of wires (7) embedded in a first surface of the interlayer material.

4. The electrically heated window of claim 2 or 3, wherein the second heating circuit comprises an electrically conductive coating (25,26) on a surface of one of the plies of glazing material.

5. The electrically heated window of claim 2 or 3, wherein the second heating circuit comprises an array of wires (8) embedded in a second surface of the interlayer material.

6. The electrically heated window of claim 1, wherein the first heating circuit comprises an array of heating conductors printed (7) on the outer surface of the inner ply of glazing material, and the second heating circuit comprises an array of wires (8) embedded in a surface of the interlayer material and electrically isolated from the first heating circuit by the interlayer material (4).

7. The electrically heated window of claim 6, wherein the heating conductors are printed with a silver-containing ink.

8. The electrically heated window of any of claims 3 to 7, wherein the wires are copper wires.

9. The electrically heated window of any of claims 1 to 8, wherein the heating element comprises a third heating circuit (9) located on the inner surface of the outer ply of glazing material.

10. The electrically heated window of claim 9, wherein the third heating circuit (9) comprises an electrically conductive coating.

11. The electrically heated window of claim 9, wherein the third heating circuit (9) comprises an array of heating conductors.

12. The electrically heated window of claim 11, wherein the heating conductors are printed with a silver-containing ink.

13. The electrically heated window of any preceding claim, wherein the electrically resistive heating element (7,8,9,35,36) extends across the area of the window where a wiper is parked in a rest position.

14. The electrically heated window of any preceding claim, wherein the window is a windscreen and at least first and second heating circuits (7,8) are concealed under an obscuration band provided around a periphery of the windscreen.

## Patentansprüche

1. Elektrisch beheiztes Fenster (1), das aus mindestens einer äußeren Lage (3a) und einer inneren Lage (3b) aus einem transparenten Verglasungsmaterial und mindestens einer Lage aus einem Zwischenschichtmaterial, die sich zwischen den Lagen aus Verglasungsmaterial erstreckt, laminiert ist, wobei das Fenster ein elektrisches Widerstandsheizelement umfasst, das sich über mindestens einen Abschnitt des Fensters erstreckt, **dadurch gekennzeichnet, dass** das elektrische Widerstandsheizelement mindestens einen ersten und einen zweiten Heizkreis (7, 8) umfasst, die elektrisch voneinander isoliert und so übereinander angeordnet sind, dass sie miteinander fluchten, so dass nur ein einziger Heizkreis von außerhalb des Fahrzeugs sichtbar ist.

2. Elektrisch beheiztes Fenster nach Anspruch 1, bei dem der erste Heizkreis eine elektrisch leitfähige Beschichtung auf einer Oberfläche der äußeren Lage des Verglasungsmaterials (3a) umfasst.

3. Elektrisch beheiztes Fenster nach Anspruch 1, bei dem der erste Heizkreis eine Anordnung von Drähten (7) umfasst, die in eine erste Oberfläche des Zwischenschichtmaterials eingebettet sind.

4. Elektrisch beheiztes Fenster nach Anspruch 2 oder 3, bei dem der zweite Heizkreis eine elektrisch leitfähige Beschichtung (25, 26) auf einer Oberfläche einer der Lagen des Verglasungsmaterials umfasst.

5. Elektrisch beheiztes Fenster nach Anspruch 2 oder 3, bei dem der zweite Heizkreis eine Anordnung von Drähten (8) umfasst, die in eine zweite Oberfläche des Zwischenschichtmaterials eingebettet sind.

6. Elektrisch beheiztes Fenster nach Anspruch 1, bei dem der erste Heizkreis eine Anordnung von Heizleitern (7) umfasst, die auf die Außenfläche der inneren Lage des Verglasungsmaterials gedruckt sind, und der zweite Heizkreis eine Anordnung von Drähten (8) umfasst, die in eine Oberfläche des Zwischenschichtmaterials eingebettet und durch das Zwischenschichtmaterial (4) elektrisch vom ersten Heizkreis isoliert sind.

7. Elektrisch beheiztes Fenster nach Anspruch 6, bei dem die Heizleiter mit einer silberhaltigen Tinte gedruckt sind.

8. Elektrisch beheiztes Fenster nach einem der Ansprüche 3 bis 7, bei dem die Drähte Kupferdrähte sind.

9. Elektrisch beheiztes Fenster nach einem der Ansprüche 1 bis 8, bei dem das Heizelement einen dritten Heizkreis (9) umfasst, der sich auf der Innenfläche der äußeren Lage des Verglasungsmaterials befindet.

10. Elektrisch beheiztes Fenster nach Anspruch 9, bei dem der dritte Heizkreis (9) eine elektrisch leitfähige Beschichtung umfasst.

11. Elektrisch beheiztes Fenster nach Anspruch 9, bei dem der dritte Heizkreis (9) eine Anordnung von Heizleitern umfasst.

12. Elektrisch beheiztes Fenster nach Anspruch 11, bei dem die Heizleiter mit einer silberhaltigen Tinte gedruckt sind.

13. Elektrisch beheiztes Fenster nach einem der vorhergehenden Ansprüche, bei dem sich das elektrische Widerstandsheizelement (7, 8, 9, 35, 36) über den Bereich des Fensters erstreckt, in dem ein Wischer in einer Ruheposition geparkt ist.

14. Elektrisch beheizte Scheibe nach einem vorhergehenden Anspruch, wobei die Scheibe eine Windschutzscheibe ist und mindestens ein erster und ein zweiter Heizkreis (7, 8) unter einem Verdunkelungsband verborgen sind, das um einen Umfang der Windschutzscheibe herum vorgesehen ist.

## Revendications

1. Vitre chauffée électriquement (1) stratifiée composée d'au moins une feuille extérieure (3a) et une feuille intérieure (3b) d'un matériau de vitrage transparent et d'au moins une feuille d'un matériau entre couches s'étendant entre les feuilles de matériau de vitrage, la vitre comprenant un élément chauffant électriquement résistif qui s'étend en travers d'au moins une partie de la vitre, **caractérisée en ce que** l'élément chauffant électriquement résistif comprend au moins un premier et un deuxième circuit de chauffage (7, 8) isolés électriquement l'un de l'autre, et positionnés l'un au-dessus de l'autre de manière à ce qu'ils soient alignés l'un avec l'autre, de sorte qu'un seul circuit soit visible à partir de l'extérieur du véhicule.

2. Vitre chauffée électriquement selon la revendication 1, dans laquelle le premier circuit de chauffage comprend un revêtement électriquement conducteur sur une surface de la feuille extérieure de matériau de vitrage (3a).

3. Vitre chauffée électriquement selon la revendication 1, dans laquelle le premier circuit de chauffage comprend un réseau de fils (7) intégrés dans une première surface du matériau entre couches.

4. Vitre chauffée électriquement selon la revendication 2 ou 3, dans laquelle le deuxième circuit de chauffage comprend un revêtement électriquement conducteur (25, 26) sur une surface de l'une des feuilles de matériau de vitrage.

5. Vitre chauffée électriquement selon la revendication 2 ou 3, dans laquelle le deuxième circuit de chauffage comprend un réseau de fils (8) intégrés dans une deuxième surface du matériau entre couches.

6. Vitre chauffée électriquement selon la revendication 1, dans laquelle le premier circuit de chauffage comprend un réseau de conducteurs chauffants (7) imprimés sur la surface extérieure de la feuille intérieure de matériau de vitrage, et le deuxième circuit de chauffage comprend un réseau de fils (8) intégrés dans une surface du matériau entre couches et isolés électriquement du premier circuit de chauffage par le matériau entre couches (4).

7. Vitre chauffée électriquement selon la revendication 6, dans laquelle les conducteurs chauffants sont imprimés avec une encre contenant de l'argent.

8. Vitre chauffée électriquement selon l'une quelconque des revendications 3 à 7, dans laquelle les fils sont des fils de cuivre.

9. Vitre chauffée électriquement selon l'une quelconque des revendications 1 à 8, dans laquelle l'élément chauffant comprend un troisième circuit de chauffage (9) situé sur la surface intérieure de la feuille extérieure de matériau de vitrage.

10. Vitre chauffée électriquement selon la revendication 9, dans laquelle le troisième circuit de chauffage (9) comprend un revêtement électriquement conducteur.

11. Vitre chauffée électriquement selon la revendication 9, dans laquelle le troisième circuit de chauffage (9) comprend un réseau de conducteurs chauffants.

12. Vitre chauffée électriquement selon la revendication 11, dans laquelle les conducteurs chauffants sont imprimés avec une encre contenant de l'argent.

13. Vitre chauffée électriquement selon l'une quelconque des revendications précédentes, dans laquelle l'élément chauffant électriquement résistif (7, 8, 9, 35, 36) s'étend en travers de la surface de la vitre où un essuie-glace est arrêté dans une position de repos.

14. Vitre chauffée électriquement selon l'une quelconque des revendications précédentes, dans laquelle la vitre est un pare-brise et au moins des premier et deuxième circuits de chauffage (7, 8) sont dissimulés sous une bande d'obscurcissement prévue autour d'une périphérie du pare-brise.
